# FASCICULE DE BREVET EUROPEEN

(11) **EP 2 358 650 B1**
(45) Date de publication et mention de la délivrance du brevet: **02.01.2013**
(21) Numéro de dépôt: 09744480.6
(22) Date de dépôt: 26.10.2009
(51) Int. Cl.: C04B 28/02, C04B 35/119, C04B 35/66

(54) **BÉTON RÉFRACTAIRE AUTO-NIVELANT**
SELBSTNIVELLIERENDER FEUERFESTER BETON
SELF-LEVELLING REFRACTORY CONCRETE

(30) Priorité: 29.10.2008 FR 0857370
(43) Date de publication de la demande: 24.08.2011
(73) Titulaire: Saint-Gobain Centre De Recherches Et D'etudes Europeen, 92400 Courbevoie (FR)
(72) Inventeur: CONSALES, Thierry, F-84210 Althen Des Paluds (FR); GAUBIL, Michel, F-30133 Les Angles (FR)
(74) Mandataire: Sartorius, Jérome
(86) Numéro de dépôt international: PCT/IB2009/054719
(87) Numéro de publication internationale: WO 2010/049872

(56) Documents cités:
- FR-A- 2 458 520
- FR-A- 2 832 403
- FR-A- 2 914 300
- US-A1- 2004 138 048

## Description

### Domaine technique

La présente invention est relative à une poudre, destinée notamment à la réalisation de soles d'un four de verrerie. L'invention concerne également un procédé de fabrication d'un béton durci à partir de cette poudre.

### Etat de la technique

L'industrie du verre utilise généralement pour la construction de ses fours des produits réfractaires fondus et coulés, ou obtenus par frittage, très résistants à la corrosion par le verre, et se présentant sous la forme de blocs ou de dalles.

L'infiltration de verre entre les dalles des soles des fours à verre provoque la corrosion des matériaux utilisés pour former la couche sous-jacente aux dalles, appelée « chape », puis la corrosion des dalles elles-mêmes. Pour limiter l'infiltration de verre en fusion entre les dalles, on peut couler un béton frais pour jointoyer ces dalles.

Le brevet FR-B-2 458 520 décrit une poudre destinée à la fabrication de tels bétons. Cette poudre, à base de particules d'un matériau réfractaire fondu et coulé contenant une matrice vitreuse, est largement utilisée. Le béton frais obtenu présente cependant l'inconvénient de ne pas être pompable avec des pompes produisant des pressions d'aspiration inférieures ou égales à 180 bar.

Des bétons frais réfractaires pompables sont utilisés pour le jointoiement des blocs de fours d'élaboration des métaux. Les contraintes dans cette application sont cependant très différentes de celles rencontrées dans l'application aux fours de verrerie. Les conditions de corrosion des fours par un verre ou par un métal en fusion sont également différentes. Certaines impuretés, tolérées dans les fours d'élaboration des métaux, sont inacceptables pour la fabrication du verre. En particulier, les matériaux réfractaires utilisés dans les fours de verrerie ne doivent pas générer de défauts tels que le lâcher de pierres par morcellement du matériau réfractaire dans le bain de verre en fusion, ou la production de bulles. Un béton réfractaire destiné à un four d'élaboration des métaux n'est donc pas, *a priori,* utilisable pour un four de verrerie.

FR 2 832 403 décrit un béton frais utilisable dans les fours verriers et facilement pompable. Ce béton frais doit être mis en oeuvre par coulage ou au moyen d'une règle vibrante, mais FR 2 832 403 ne fournit aucune information sur le caractère auto nivelant.

La fabrication d'un béton durci à partir de la poudre décrite et revendiquée dans FR 2 832 403 nécessite classiquement une activation par un ajout d'eau, de manière à constituer un béton frais, puis, après coulage du béton frais, l'application d'une vibration, en général à l'aide d'une règle vibrante. Cette opération de vibration peut être longue.

Cette opération est également délicate et nécessite un savoir-faire particulier. En effet, une vibration qui n'est pas effectuée de façon homogène peut entraîner de la ségrégation dans le béton frais coulé et, en conséquence, des fissurations lors du séchage ou lors de l'attrempage.

Ce problème est d'autant plus critique que le béton frais coulé recouvre une grande surface.

Il existe donc un besoin pour une poudre utilisable dans les fours verriers plus facile à mettre en oeuvre.

Il existe également un besoin pour un béton frais facilement pompable, ne nécessitant pas une opération de vibration pour être mis en place et ne conduisant pas à une ségrégation.

La présente invention vise à satisfaire, au moins partiellement, ces besoins.

### Résumé de l'invention

L'invention propose une poudre, destinée notamment à la réalisation de soles d'un four de verrerie, comportant, en pourcentages en masse,
(a) 94% à 99% de particules d'au moins un matériau réfractaire dont le ou les constituants principaux sont l'alumine (Al₂O₃) et/ou la zircone (ZrO₂) et/ou la silice (SiO₂),
(b) 1% à 6%, de préférence 3% à 5%, d'un ciment hydraulique,
(c) 0 à 0,03% de fibres organiques,
(d) optionnellement, de préférence, de 0,075% à 1%, de préférence 0,1% à 1%, d'un agent tensio-actif,
(e) optionnellement un accélérateur de prise,
la fraction des particules ayant une taille inférieure à 40 µm étant distribuée, en pourcentages en masse par rapport à la masse de la poudre, de la manière suivante :
- fraction < 0,5 µm : ≥ 4%
- fraction < 2 µm : ≥ 5%, de préférence ≥ 8%
- fraction < 10 µm : ≥ 16%
- fraction < 40 µm : 29-45%, de préférence 30-45%

la proportion de zircone dans la fraction des particules ayant une taille inférieure à 10 µm, appelées ci-après « fines », étant comprise entre 35% et 75% en masse par rapport à la masse totale de ladite fraction.

Comme on le verra plus en détail dans la suite de la description, un béton frais fabriqué à partir d'une telle poudre, et à condition que l'agent tensio-actif soit présent dans le béton frais, peut être
- pompable avec des pressions d'aspiration inférieures ou égales à 180 bar,
- « auto nivelant », c'est-à-dire qu'il peut être mis en place sans opération de vibration, et
- ne conduit pas à une ségrégation.

La proportion de zircone dans la fraction des fines peut en particulier être supérieure à 40%, supérieure à 45%, supérieure à 50% et/ou être inférieure à 60%, voire inférieure à 55% ou inférieure à 53%.

De préférence, les particules de la poudre se répartissent de la manière suivante, en pourcentages massiques :
- fraction < 0,5 µm : ≥ 5% et/ou < 6,5% et/ou
- fraction < 2 µm : ≥ 8%, de préférence ≥ 10%, de préférence ≥ 13% et/ou ≤ 18% et/ou
- fraction < 10 µm : ≥ 22%, de préférence ≥ 24% et/ou < 35%, de préférence ≤ 34% et/ou
- fraction < 40 µm : ≥ 30% et/ou ≤ 40%.

De préférence, la poudre présente la composition massique suivante, pour un total de plus de 95, de préférence pour un total de plus de 97% :
- Al₂O₃ : 40%-65%
- ZrO₂ : 20%-45%
- SiO₂ : 8%-20%.

De préférence,
- Al₂O₃ : ≥ 45%, de préférence ≥ 50% et/ou ≤60% et/ou
- ZrO₂ : ≥ 25%, de préférence ≥ 30%, et/ou ≤40%, voire ≤35% et/ou
- SiO₂ : ≥12% et/ou ≤15%.

De préférence, les fractions (a) et (b) de la poudre comportent ensemble, en pourcentages massiques :
- une teneur en particules AZS supérieure à 40%, supérieure à 45%, supérieure à 50%, supérieure à 55% et/ou inférieure à 70%, inférieure à 65%, inférieure à 60% ; et/ou
- une teneur en zircone « libre », c'est-à-dire non associée à un autre composé, comme par exemple dans de la mullite ou dans un matériau AZS, supérieure à 5%, supérieure à 8%, supérieure à 10%, supérieure à 12% et/ou inférieure à 30%, inférieure à 25%, inférieure à 20%, inférieure à 18% ; et/ou
- une teneur totale en alumine libre, c'est-à-dire non associée à un autre composé, comme par exemple dans un matériau AZS, supérieure à 5%, supérieure à 8%, supérieure à 10%, supérieure à 15%, supérieure à 18% et/ou inférieure à 30%, inférieure à 25%, inférieure à 22% ; et/ou
- une teneur en alumine réactive supérieure à 1%, supérieure à 3%, supérieure à 5%, supérieure à 7%, et/ou inférieure à 15%, inférieure à 13%, inférieure à 10% ; et/ou
- une teneur en alumine électrofondue supérieure à 5%, supérieure à 8%, supérieure à 10%, et/ou inférieure à 20%, inférieure à 17%, inférieure à 14% ; et/ou
- une teneur en fumée de silice inférieure à 6%, inférieure à 5%, inférieure à 4%, et/ou supérieure à 1%, supérieure à 2% ; et/ou
- une teneur en ciment hydraulique inférieure à 10%, inférieure à 7%, inférieure à 6%, et/ou supérieure à 2%, supérieure à 4%.

De préférence, les particules AZS, les particules en zircone libre, les particules en alumine libre, la fumée de silice et les particules de ciment représentent ensemble plus de 95%, voire sensiblement 100% de la masse de l'ensemble des fractions (a) et (b).

De préférence, la poudre comporte entre 3% et 5% de fumée de silice.

De préférence Al₂O₃ + ZrO₂ + SiO₂ ≥ 97%.

De préférence encore, la proportion de silice dans la fraction des particules de taille inférieure à 500 µm est inférieure ou égale à 16% et/ou la proportion de silice dans la fraction des particules ayant une taille inférieure à 40 µm est inférieure ou égale à 14,5%, en pourcentages massiques par rapport à la masse de ladite fraction.

De préférence, la taille maximale des particules d'une poudre selon l'invention est inférieure ou égale à 10 mm, de préférence inférieure ou égale à 8 mm, de préférence inférieure ou égale à 5 mm.

De préférence, la fraction des particules de la poudre de taille inférieure à 500 µm représente plus de 50% en masse de ladite poudre.

De préférence, la fraction des particules de la poudre de taille comprise entre 40 µm et 500 µm est comprise entre 15 et 30%, de préférence supérieure à 17%, supérieure à 18% et/ou inférieure à 28%, inférieure à 25%, inférieure à 22%, par rapport à la masse de ladite poudre.

L'invention concerne également un béton frais obtenu à partir d'une poudre selon l'invention.

De plus, le béton durci obtenu à partir de ce béton frais présente un comportement dilatométrique satisfaisant. Il est donc parfaitement apte à être utilisé pour la réalisation de soles d'un four de verrerie.

L'invention concerne encore un procédé de fabrication d'un béton durci, comportant les étapes successives suivantes :
1) préparation d'une poudre selon l'invention ;
2) activation de ladite poudre de manière à obtenir un béton frais ;
3) mise en place dudit béton frais ;
4) durcissement dudit béton frais de manière à obtenir un béton durci;
5) frittage dudit béton durci.

De préférence, à l'étape 1), on utilise, comme sources de zircone dans les fines, des matières premières contenant plus de 90% de zircone en masse et présentant une taille médiane (D₅₀) inférieure à 10µm, de préférence inférieure à 5µm, comme les zircones CC10 commercialisées par la Société Européenne des Produits Réfractaires.

De préférence, à l'étape 2), on active ladite poudre en y ajoutant une quantité d'eau de préférence supérieure à 5%, ou supérieure à 6%, et/ou inférieure à 9%, inférieure à 8%, inférieure à 7%, de préférence comprise entre 5,1 et 8,2% en masse par rapport à la masse de ladite poudre.

Avantageusement, à l'étape 3), le béton frais peut être pompé au moyen d'une pompe produisant une pression d'aspiration inférieure ou égale à 180 bars.

De préférence, à l'étape 3), le béton frais est transféré du malaxeur au lieu de coulage par l'intermédiaire d'une goulotte dans laquelle il s'écoule par gravité.

De préférence, le béton frais est coulé et ne subit aucune opération de vibration avant son durcissement.

De préférence, à l'étape 5), le béton durci est fritté à une température comprise entre 1000°C et 1500°C de préférence sous air à pression atmosphérique. La durée de frittage est adaptée en fonction des dimensions du produit à fritter. La durée du palier de frittage est généralement comprise entre 1 et 20 heures, de préférence entre 5 à 10 heures. Dans les applications où, dans sa position de service, le béton durci peut être soumis à des conditions de chauffage susceptibles de le fritter, le béton durci est mis en position sans avoir été fritté, puis fritté *in situ.*

A l'étape 3), le béton frais peut être coulé de manière que le béton durci constitue une sole d'un four de verrerie.

### Définitions

- Par « poudre », on entend un mélange particulaire sec apte à prendre en masse après activation.
- La « taille » d'une particule est donnée classiquement par une caractérisation de distribution granulométrique. Un granulomètre laser permet par exemple la mesure des tailles inférieures ou égale à 5 mm.
- On appelle « taille médiane » d'un ensemble de particules, notée D₅₀, la taille divisant les particules de cet ensemble en première et deuxième populations égales en masse, ces première et deuxième populations ne comportant que des particules présentant une taille supérieure, ou inférieure respectivement, à la taille médiane.
- L'activation est un processus de prise en masse. L'état activé résulte classiquement d'une humidification d'une poudre avec de l'eau ou un autre liquide. Pendant ce processus, une poudre humide est appelée « béton frais ».
- Une masse solide obtenue par la prise en masse d'un béton frais est appelée « béton durci».

Un béton durci est ainsi constitué d'un ensemble de grains liés par une matrice.
- Un ciment hydraulique, ou « liant hydraulique », est un liant qui, lors de l'activation, génère une prise et un durcissement hydraulique, généralement à température ambiante.
- On appelle « zircone » l'oxyde de zirconium ZrO₂. Lorsqu'il est fait référence à ZrO₂, il y a lieu de comprendre (ZrO₂+HfO₂). En effet, un peu de HfO₂, chimiquement indissociable du ZrO₂ dans un procédé de fusion et présentant des propriétés semblables, est toujours naturellement présent dans les sources de zircone à des teneurs généralement inférieures à 2%. L'oxyde d'hafnium n'est alors pas considéré comme une impureté.
- Par « constituants principaux », on entend les constituants dont les proportions massiques sont les plus élevées.
- Tous les pourcentages de la présente description sont des pourcentages en masse sauf mention contraire.

### Description détaillée

Lesdites particules (a) peuvent être constituées en des matériaux réfractaires présentant des analyses chimiques diverses. Les répartitions granulométriques des particules peuvent également différer selon leur matériau de constitution, pourvu que, globalement, les contraintes granulométriques imposées par l'invention soient respectées.

La proportion de zircone dans les fines (fraction de la poudre constituée des particules ayant une taille inférieure à 10 µm) doit cependant être comprise entre 40% et 75% en masse par rapport à la masse totale de ladite fraction.

Sans être liés par une théorie, les inventeurs considèrent que la présence de zircone dans les fines, dans les proportions indiquées, facilite la mise en place du béton frais sous son propre poids, les fines particules de zircone favorisant le déplacement des particules les unes par rapport aux autres, et empêche la ségrégation.

L'augmentation de la teneur en zircone dans les fines se traduit par une augmentation importante du lâcher de pierres au-delà d'une teneur en zircone dans les fines d'environ 65%. En deçà de 55% de zircone dans les fines, le lâcher de pierres devient faible, voire sensiblement nul. De préférence, la teneur en zircone dans les fines est donc comprise entre 40% et 65%, de préférence entre 40% et 55%.

De préférence, la poudre présente une composition, en pourcentage en masse et pour un total de plus de 95%, de préférence pour un total de plus de 97%, telle que :
- Al₂O₃: 40-65%
- ZrO₂: 20-45%
- SiO₂ : 8-20%

De préférence encore, la poudre présente une composition, en pourcentage en masse et pour un total de plus de 95%, de préférence pour un total de plus de 97%, telle que :
- Al₂O₃ : 45-65%, de préférence 50-60%
- ZrO₂ : 25-40%, de préférence 30-40%
- SiO₂ : 8-15%.

La poudre peut également présenter une composition, en pourcentage en masse et pour un total de plus de 95%, de préférence pour un total de plus de 97%, telle que :
- Al₂O₃ : 45-65%,
- ZrO₂ : 20-35%,
- SiO₂ : 12-20%.

Pour obtenir les particules (a), on peut utiliser différents matériaux réfractaires, provenant par exemple :
- des produits réfractaires électrofondus tels que l'ER-1681 ou l'ER-1711 produits et commercialisés par la Société Européenne des Produits Réfractaires. Ces deux produits, appelés dans le tableau 1 « particules AZS » (du fait de leurs teneurs en Al₂O₃, ZrO₂ et SiO₂), contiennent en pourcentage en masse, sur la base des oxydes :
   32 à 54% de ZrO₂, 36 à 51% d'Al₂O₃, 10 à 16% de SiO₂ et 0,2 à 1,5% de Na₂O ;
- des produits réfractaires en mullite fondue, appelés « Mullite » dans le tableau 1, par exemple une poudre qui contient 76,5% d'Al₂O₃ et 22,5% de SiO₂ et dont la taille des particules varie de 0,7 à 1,5 mm ;
- des produits à forte teneur en zircone, appelés « zircone » dans le tableau 1, tels que la zircone CC10 commercialisée par la Société Européenne des Produits Réfractaires. Ce produit contient plus de 99% de ZrO₂ et la taille médiane (D50) des particules de zircone est de 3,5 µm ;
- de l'alumine réactive, ou un mélange d'alumines réactives, contenant plus de 99% d'Al₂O₃, la taille médiane des particules d'alumine réactive pouvant varier de 0,5 µm à 3 µm;
- de l'alumine électrofondue dont les particules ont une taille comprise entre 0,04 et 0,5 mm ;
- de la silice telle que la fumée de silice commercialisée par la Société Européenne des Produits Réfractaires. Cette silice vitreuse contient plus de 93% de silice (SiO₂) et se présente sous la forme d'une poudre dont les particules ont une taille comprise entre 0,1 et 5 µm et une taille médiane de 0,5 µm.

Avantageusement, la présence de silice permet de réduire la quantité d'eau nécessaire pour rendre le béton frais coulable. Il semble que les très fines particules de silice se répartissent bien et permettent ensuite d'obtenir une bonne liaison dans le produit final après frittage. Pour cette raison, on considère qu'il est préférable d'avoir entre 3% et 5% de fumée de silice dans la poudre.

De préférence, la proportion de silice dans la fraction des particules ayant une taille inférieure à 500 µm est inférieure ou égale à 16%, de préférence inférieure à 14,5% en masse par rapport à la masse de ladite fraction.

De préférence, la proportion de silice dans la fraction des particules ayant une taille inférieure à 40 µm est inférieure ou égale à 14,5%, voire même inférieure à 11% en masse par rapport à la masse de ladite fraction.

Le ciment hydraulique, référencé par (b), constitue 1% à 6% de la poudre, de préférence plus de 3% et/ou moins de 5% en masse. Le ciment hydraulique (b) peut être un ciment alumineux ou un mélange de différents ciments. Pour limiter la teneur en chaux (CaO), on préfère utiliser un ciment à forte teneur en alumine, tel que le ciment CA25 de la société Alcoa. Le ciment CA25 contient plus de 78% d'Al₂O₃ et moins de 19% de CaO. Les particules du ciment CA25 ont une taille médiane d'environ 8 µm.

De préférence, la teneur en alumine du ciment hydraulique est supérieure à 60% en masse. De préférence encore, le ciment hydraulique contient, comme constituants principaux de l'alumine et des aluminates de calcium.

La poudre selon l'invention peut encore comporter des fibres organiques (c) dans une proportion de 0 à 0,03%. Ces fibres sont par exemple des fibres de polypropylène, de polyacrylonitrile ou de polyvinyl alcool, dont la longueur moyenne varie entre 18 et 24 mm.

La présence de fibres organiques permet d'améliorer la résistance à cru du béton durci et d'éviter la formation de fissures lors de son séchage. Ces fibres ne sont cependant pas indispensables. En outre l'ajout de fibres réduit la propriété du béton frais à être auto nivelant et au-delà de 0,03%, la proportion de fibres empêche le béton frais d'être auto nivelant

Par ailleurs, les fibres organiques (c) sont éliminées lors de la phase de montée en température du four, créant ainsi un réseau de petits canaux permettant une évacuation plus efficace de l'eau.

De préférence, la poudre selon l'invention comporte encore au moins un agent tensio-actif (d) dans une proportion de 0,1% à 1%, de préférence en une quantité supérieure à 0,2% et/ou inférieure à 0,5%, de préférence encore inférieure à 0,4%. Le rôle de cet agent tensio-actif est notamment de modifier les propriétés rhéologiques du béton frais pour en faciliter le pompage. On utilise de préférence des agents tensio-actifs de type polycarboxylate modifié, de préférence de type éther polycarboxylate modifié, de préférence encore à base de polyéthylène glycol.

De préférence, la poudre selon l'invention comporte encore au moins un accélérateur de prise (e), de préférence dans une proportion de 0,01 à 0,15%. De tels accélérateurs de prise sont connus en eux-mêmes par l'homme du métier.

La distribution granulométrique des particules de la poudre est telle que :
- fraction < 0,5 µm : ≥ 4%
- fraction < 2 µm : ≥ 5%
- fraction < 10 µm : ≥ 16%
- fraction < 40 µm : 29-45%.

Il est clair que les particules ayant une taille inférieure à 10 µm (qui constituent la « fraction < 10 µm ») sont comptabilisées dans les 29% à 45% des particules ayant une taille inférieure à 40µm, que les particules ayant une taille inférieure à 2 µm sont comptabilisées dans les particules ayant une taille inférieure à 40 µm et dans celles ayant une taille inférieure à 10µm, etc.

De préférence, les particules de la poudre se répartissent de la manière suivante :
- fraction < 0,5 µm ≥4%
- fraction < 2 µm : ≥ 8%
- fraction < 10 µm : ≥16%
- fraction < 40 µm : 30-45%.

De préférence encore, les particules de la poudre se répartissent de la manière suivante :
- fraction < 0,5 µm : ≥5%
- fraction < 2 µm : ≥10%
- fraction < 10 µm : ≥ 22%
- fraction < 40 µm : 30-45%.

De préférence toujours, les particules de la poudre se répartissent de la manière suivante :
- fraction < 0,5 µm : ≥ 5%
- fraction < 2 µm : 10% - 18%
- fraction < 10 µm : 22% - 35%
- fraction < 40 µm : 30% - 40% ;

De préférence toujours, les particules de la poudre se répartissent de la manière suivante :
- fraction < 0,5 µm : 5% - 6,5%
- fraction < 2 µm : 13% - 18%
- fraction < 0 µm : 24% - 34%
- fraction < 40 µm : 30% - 40%.

Une poudre selon l'invention peut être conditionnée en sac ou en fûts. De préférence, la poudre est prête à emploi, c'est-à-dire incorpore tous les constituants sauf l'eau.

Pour fabriquer un béton frais à partir d'une poudre de l'invention, on mélange intimement les différents composants avec une quantité d'eau (f) variant entre 5,1% et 8,2% en masse par rapport à la masse de ladite poudre. La teneur en eau peut être ajustée en fonction du béton.

Avantageusement, ce béton frais peut être acheminé directement dans le four de verrerie, par exemple pour réaliser la sous-couche de sole, par écoulement par gravité à l'intérieur d'une goulotte. Il peut également être pompé à l'aide d'une pompe à pistons. Il peut alors être mis en oeuvre par simple coulage sans vibration.

On laisse alors reposer le béton durci, selon l'invention, à température ambiante. La montée en température du four provoque ensuite un frittage du béton durci et conduit à un béton durci et fritté également selon l'invention. Une température de frittage comprise entre 1000 et 1500°C est bien adaptée. Si le béton durci est fritté dans un four, le temps de maintien en palier peut être compris entre 1 et 20 heures, de préférence compris entre 5 et 10 heures.

De préférence, le frittage est *effectué in situ.*

La poudre de l'invention peut également servir à fabriquer des pièces de forme de dimensions diverses, et en particulier destinées à être assemblées dans un four de verrerie.

### Exemples

Les exemples non limitatifs qui vont suivre sont donnés en vue d'illustrer l'invention.

Le caractère « auto nivelant » et la ségrégation sont évalués par le test suivant :
25 kg de béton frais sont préparés dans un mélangeur, avec un temps de malaxage de 17 minutes, puis déversés dans une trémie préalablement huilée, en forme de pyramide tronquée, disposée pointe en bas, et présentant une hauteur 320 mm, une ouverture d'entrée de section carrée supérieure de 350 mm x 350 mm et une ouverture de sortie de section carrée inférieure de 130 x 130 mm initialement fermée par une trappe.

La trappe de la trémie est ensuite ouverte d'un coup sec et le béton frais se déverse sous son propre poids, à travers l'ouverture de sortie, dans l'extrémité supérieure (à 700 mm du sol) d'une gouttière rectiligne en PVC demi-circulaire préalablement huilée, présentant un diamètre de 170 mm et une longueur 1600 mm, l'extrémité inférieure de la gouttière étant à 380 mm du sol.

Le béton frais s'écoule dans la gouttière et se déverse dans un moule disposé sous la gouttière, sous l'extrémité inférieure de la gouttière. Le moule est un moule en bois de dimensions 300 mm x 300 mm x 60 mm, huilé et disposé horizontalement sur le sol.

On attend ensuite que le béton frais durcisse sous la forme d'une dalle.

Sur chacune des quatre faces latérales de la dalle, l'épaisseur de la dalle est mesurée aux deux extrémités et au milieu de la longueur de la face.

Le caractère auto nivelant (« AN ») est acquis si la surface supérieure de la dalle apparaît sensiblement lisse à l'oeil et si la différence « E » entre la plus petite épaisseur mesurée et la plus grande épaisseur mesurée est inférieure ou égale ou 2 mm sur chacune des quatre faces latérales.

Après étuvage à 110°C pendant 24 heures, la dalle est sciée en deux par son centre, exposant ainsi deux faces sciées. La ségrégation conduit les plus gros grains à migrer en s'écartant de la face supérieure de la dalle. On considère qu'il y a ségrégation lorsque les faces sciées font apparaître une couche superficielle de laitance s'étendant, depuis la face supérieure de la dalle, sur une profondeur « e » de 3 mm ou plus.

On prélève un échantillon sur chacune des dalles réfractaires pour évaluer le comportement dilatométrique. Compte tenu des teneurs en Al₂O₃, ZrO₂ et SiO₂, les matériaux de ces dalles réfractaires appartiennent à la famille AZS. En conséquence, lorsque les échantillons sont portés à 1350°C, ils se dilatent jusqu'à une température de dilatation maximale Tdₘₐₓ, puis se rétractent. On mesure la température Tdₘₐₓ ainsi que la dilatation ΔL%.

La dilatation d'un matériau réfractaire génère des contraintes thermomécaniques qui peuvent être à l'origine de fissures. Il est donc préférable que la température de dilatation maximale Tdₘₐₓ soit proche de la température de service, généralement comprise entre 1250°C et 1300 C.

ΔL% est égal au rapport de la différence des longueurs de l'échantillon Lₘₐₓ et L₁₃₅₀, à Tdₘₐₓ et à 1350°C respectivement, sur la longueur initiale L de l'échantillon (à température ambiante d'environ 20°C), soit : ΔL%=(Lₘₐₓ-L₁₃₅₀)/L, avec L égale à 50 mm.

Le tableau 1 fournit la composition des mélanges particulaires (a) + (b). Il indique également la distribution granulométrique des particules AZS utilisées. En particulier, les colonnes sous « Particules AZS (pourcentages massiques) » correspondent aux sources commerciales utilisées comme matières premières, et non pas à des valeurs de distribution granulométrique effectivement mesurées. Ainsi, par exemple, l'exemple « comp 1 » est obtenu à partir d'une charge de départ constituée, pour 10%, à partir d'une source commerciale de particules AZS dont la fiche technique ou le conditionnement indiquent « 40-500 µm ». Mais l'ensemble des particules de cette source commerciale de particules d'AZS ne présente pas strictement une taille comprise entre 40 et 500 µm. Les valeurs granulométriques mesurées sont fournies dans le tableau 2.

Le tableau 2 fournit les compositions des bétons frais testés. Les teneurs en Al₂O₃, ZrO₂ et SiO₂ des bétons obtenus à partir des bétons frais sont sensiblement identiques à celle des poudres utilisées.

Dans le tableau 2, l'agent tensio-actif A est un polyphosphate de sodium à longue chaîne et les agents tensio-actifs B et C sont des composés de la famille des éther polycarboxylates modifiés. Le choix d'un tensio-actif parmi les tensio-actifs généralement utilisés par l'homme du métier sera guidé par les résultats d'essais simples, tels que ceux décrits dans la présente demande, en fonction des performances recherchées (densité du béton durci obtenu, propriétés dilatométriques du béton durci obtenu).

Dans le tableau 2, la colonne « ZrO₂ : 0 - 10 µm » représente la proportion de zircone dans la fraction des particules ayant une taille inférieure à 10 µm, en % massique par rapport à la masse totale de ladite fraction.

**Tableau 1**

| | Composition de (a) + (b), en pourcentages massiques | | | | | | | | | |
|---|---|---|---|---|---|---|---|---|---|---|
| | Particules AZS (pourcentages massiques) | | | | Mullite | Zircone | Alumine réactive | Alumine électrofondue | Fumée de silice | Ciment |
| n° | 2-5 mm | 0,5 - 2 mm | 40 - 500 µm | 0-40 µm | | | | | | |
| comp 1 | 21 | 18 | 10 | 8 | 8 | 4 | 11 | 12 | 3 | 5 |
| comp 2 | 21 | 18 | 10 | 8 | 8 | 4 | 11 | 12 | 3 | 5 |
| comp 3 | 21 | 18 | 10 | 8 | 8 | 4 | 11 | 12 | 3 | 5 |
| comp 4 | 20 | 23 | 19 | | 12 | 8 | 11 | | 3 | 4 |
| comp 5 | 20 | 23 | 19 | | 12 | 8 | 11 | | 3 | 4 |
| comp 6 | 20 | 20 | 21 | | 8 | 7 | 17 | | 3 | 4 |
| 1 | 21 | 18 | 10 | 3 | 8 | 13 | 7 | 12 | 3 | 5 |
| 2 | 21 | 26 | 10 | | | 15 | 8 | 12 | 3 | 5 |
| 3 | 21 | 26 | 10 | | | 15 | 8 | 12 | 3 | 5 |
| 4 | 21 | 26 | 10 | | | 15 | 8 | 12 | 3 | 5 |
| 5 | 21 | 26 | 10 | | | 15 | 8 | 12 | 3 | 5 |
| 6 | 21 | 26 | 10 | | | 15 | 8 | 12 | 3 | 5 |
| 7 | 21 | 26 | 10 | | | 15 | 8 | 12 | 3 | 5 |
| 8 | 21 | 26 | 10 | | | 12 | 11 | 12 | 3 | 5 |
| 9 | 19 | 24 | 9 | | | 18 | 11 | 11 | 3 | 5 |
| 10 | 21 | 26 | 12 | | | 15 | 6 | 12 | 3 | 5 |
| 11 | 21 | 26 | 12 | | | 18 | 3 | 12 | 3 | 5 |
| 12 | 19 | 24 | 9 | | | 26 | 3 | 11 | 3 | 5 |
| 13 | 21 | 26 | 10 | | | 15 | 8 | 12 | 3 | 5 |
| 14 | 21 | 26 | 10 | | | 15 | 8 | 12 | 3 | 5 |
| 15 | 21 | 26 | 10 | | | 15 | 8 | 12 | 3 | 5 |

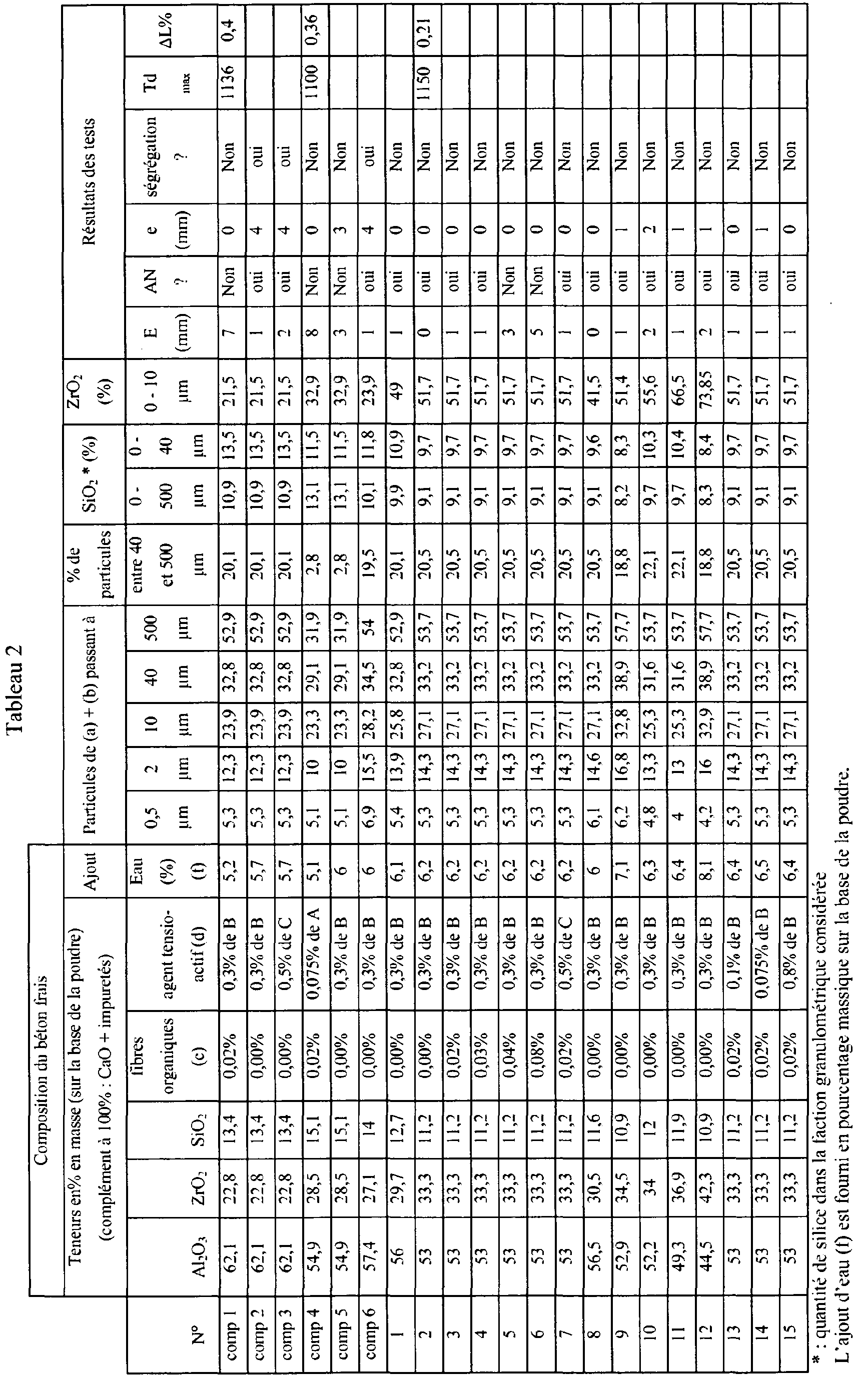

Les résultats permettent de faire les constats suivants :
- L'exemple « Comp 1 », conforme à l'enseignement de FR 2 832 403, ne présente pas un caractère auto nivelant sans ségrégation.
- Une comparaison des exemples « Comp 1 » et « Comp 2 » montre qu'une augmentation de la teneur en eau (passage de 5,2% à 5,7% et suppression des fibres) ne suffit pas à donner un caractère auto nivelant sans ségrégation au béton frais. Le béton frais « Comp 2 » est auto nivelant, mais présente de la ségrégation. L'augmentation de la teneur en eau peut entraîner une dégradation des propriétés du béton durci.
- Une comparaison des exemples « Comp 1 », « Comp 2 » et « Comp 3 » montre qu'un changement d'agent tensio actif (C au lieu de B) ne permet pas de donner un caractère auto nivelant sans ségrégation au béton frais (qui est celle de l'exemple Comp 1 et 2).
- L'exemple « Comp 4 » montre qu'une teneur en zircone dans les fines de 32,9% ne suffit pas à conférer le caractère auto nivelant.
- L'exemple « Comp 5 » montre qu'une modification de l'agent tensio actif et de la teneur en eau ne rend pas nécessairement un béton frais auto nivelant. De plus, on constate que si on augmente encore la teneur en eau, on peut obtenir le caractère auto nivelant, mais au prix d'une ségrégation.
- Le béton frais de l'exemple « Comp 6 » est auto nivelant mais présente de la ségrégation.
- L'exemple 1 présente une répartition granulométrique très proche de celle de l'exemple « Comp 1 », mais avec une teneur en zircone dans les fines de 49% (contre 21,5% pour « Comp1 ») grâce à une addition supplémentaire de fines de zircone (augmentation de 4% à 13%). L'exemple 1 présente avantageusement un caractère auto nivelant sans ségrégation. Les exemples 2 à 7 présentent des compositions similaires à celles de l'exemple 1.
- Les exemples 2, 3 et 4 montrent qu'une teneur en fibres jusqu'à 0,03% ne dégrade pas le caractère auto nivelant. Les exemples 5 et 6 montrent cependant qu'une teneur en fibres de 0,05% et de 0,08% supprime le caractère auto nivelant.
- L'exemple 7 montre que le caractère auto nivelant n'est pas perdu avec l'utilisation d'un agent tensio actif différent (type C).
- L'exemple 8 présente une teneur en zircone dans les fines de 41,5%. Une comparaison avec les exemples « Comp 4 » et « Comp 5 » indique qu'une teneur en zircone d'au moins 40% dans les fines est nécessaire pour obtenir le caractère auto nivelant et une absence de ségrégation.
- Les exemples 9 à 12 permettent d'évaluer la teneur maximale en zircone dans la fraction des fines pour conserver le caractère auto nivelant et une absence de ségrégation. L'exemple 12 montre en particulier que l'on peut introduire jusqu'à 73,8% de zircone dans la fraction des fines. De plus fortes teneurs en fines de zircone dégradent significativement le comportement au lâcher de pierres.
- Les poudres des exemples 2 à 7 sont préférées. La poudre de l'exemple 3 est préférée entre toutes (0,02% de fibres).

Comme cela apparaît clairement à présent, l'invention fournit une poudre permettant de fabriquer un béton frais « auto nivelant », c'est-à-dire qu'il peut être mis en place sans opération de vibration, et qui ne conduit pas à une ségrégation.

De plus, ce béton frais peut être pompable avec des pressions d'aspiration inférieures ou égales à 180 bar.

Un béton frais selon l'invention permet donc de fabriquer sans opération de vibration un béton durci, et en particulier une sole, notamment pour un four de verrerie où le béton durci entre en contact avec du verre en fusion. En dépit de l'absence d'opération de vibration, ce béton durci présente un excellent comportement en service.

Bien entendu la présente invention n'est pas limitée aux modes de réalisation décrits, fournis à titre d'exemples illustratifs et non limitatifs.

## Revendications

1. Poudre comportant, en pourcentages en masse,
(a) 94% à 99% de particules d'au moins un matériau réfractaire dont le ou les constituants principaux sont l'alumine et/ou la zircone et/ou la silice,
(b) 1% à 6% d'un ciment hydraulique,
(c) 0 à 0,03% de fibres organiques,
(d) optionnellement, 0,075% à 1%, de préférence 0,1 % à 1%, d'un agent tensio-actif,
(e) optionnellement un accélérateur de prise,
la fraction des particules ayant une taille inférieure à 40 µm étant distribuée, en pourcentages en masse par rapport à la masse de la poudre, de la manière suivante :
- fraction < 0, 5 µm : ≥ 4%
- fraction < 2 µm : ≥ 5%,
- fraction < 10 µm : ≥ 16%
- fraction < 40 µm : 29-45%,
la proportion de zircone dans la fraction des particules ayant une taille inférieure à 10 µm, dite « fines », étant comprise entre 35% et 75% en masse par rapport à la masse totale de ladite fraction.

2. Poudre selon la revendication précédente, comportant 0,075% à 1% d'un agent tensio-actif et/ou comportant un accélérateur de prise.

3. Poudre selon l'une quelconque des revendications précédentes, dans laquelle la proportion de zircone dans la fraction des fines est supérieure à 40% et inférieure à 60%.

4. Poudre selon l'une quelconque des revendications précédentes, dans laquelle les particules de la poudre se répartissent de la manière suivante, en pourcentages massiques :
- fraction < 0,5 µm : ≥ 5%
- fraction < 2 µm : ≥ 8% et/ou
- fraction < 10 µm ≥ 22% et/ou
- fraction < 40 µm : ≥ 30%.

5. Poudre selon l'une quelconque des revendications précédentes, dans laquelle les particules de la poudre se répartissent de la manière suivante, en pourcentages massiques :
- fraction < 0,5 µm : ≤6,5%
- fraction < 2 µm : ≥ 10% et/ou
- fraction < 10 µm : ≤ 35% et/ou
- fraction < 40 µm : ≤ 40%.

6. Poudre selon l'une quelconque des revendications précédentes, dans laquelle les particules de la poudre se répartissent de la manière suivante, en pourcentages massiques :
- fraction < 2 µm : ≤18%

7. Poudre selon l'une quelconque des revendications précédentes, qui présente la composition massique suivante, pour un total de plus de 95%
- Al₂O₃ : 40%-65%
- ZrO₂ : 20%-45%
- SiO₂ : 8%-20%

8. Poudre selon l'une quelconque des revendications précédentes, qui présente la composition massique telle que
- Al₂O₃ : ≥ 45% et/ou
- ZrO₂ : ≥25% et/ou
- SiO₂ : ≤15%.

9. Poudre selon l'une quelconque des revendications précédentes, qui présente la composition massique telle que
- Al₂O₃ : ≤60% et/ou
- ZrO₂ : ≤40% et/ou
- SiO₂ : ≥12%.

10. Poudre selon l'une quelconque des revendications 7 à 9, dans laquelle Al₂O₃ + ZrO₂ + SiO₂ ≥ 97%.

11. Poudre selon l'une quelconque des revendications précédentes, comportant entre 3% et 5% de fumée de silice.

12. Poudre selon l'une quelconque des revendications précédentes, dans laquelle la proportion de silice dans la fraction des particules ayant une taille inférieure à 500 µm est inférieure ou égale à 16%, en pourcentage massique par rapport à la masse de ladite fraction et/ou dans laquelle la proportion de silice dans la fraction des particules ayant une taille inférieure à 40 µm est inférieure ou égale à 14,5%, en pourcentage massique par rapport à la masse de ladite fraction.

13. Poudre selon l'une quelconque des revendications précédentes, dans laquelle l'agent tensio-actif est un éther polycarboxylate modifié.

14. Poudre selon l'une quelconque des revendications précédentes, dans laquelle la fraction des particules de taille inférieure à 500 µm représente plus de 50% de la masse de ladite poudre et/ou dans laquelle la fraction des particules de taille comprise entre 40 µm et 500 µm est comprise entre 15 et 30% par rapport à la masse de ladite poudre,

15. Procédé de fabrication d'un béton durci et fritté, comportant les étapes successives suivantes :
1) préparation d'une poudre ;
2) activation de ladite poudre de manière à obtenir un béton frais ;
3) mise en place dudit béton frais ;
4) durcissement dudit béton frais de manière à obtenir un béton durci;
5) frittage dudit béton durci ;
procédé selon lequel, à l'étape 1), la poudre est conforme à l'une quelconque des revendications précédentes, et selon lequel, à l'étape 3), le béton frais est coulé et ne subit aucune opération de vibration avant son durcissement.

16. Procédé selon la revendication précédente dans lequel, à l'étape 1), on utilise, comme source de zircone dans les fines, des matières premières contenant plus de 90% de zircone en masse et présentant une taille médiane D50 inférieure à 10µm.

17. Procédé selon l'une quelconque des deux revendications immédiatement précédentes, dans lequel, à l'étape 2), on active ladite poudre en y ajoutant une quantité d'eau comprise entre 5,1 et 8,2% en pourcentage massique par rapport à la masse de ladite poudre.

18. Procédé selon l'une quelconque des trois revendications immédiatement précédentes, dans lequel, à l'étape 3), le béton frais est pompé au moyen d'une pompe produisant une pression d'aspiration inférieure ou égale à 180 bars et/ou acheminé sur le lieu du coulage par écoulement, par gravité, dans une goulotte.

19. Procédé selon l'une quelconque des quatre revendications immédiatement précédentes, dans lequel; à l'étape 3), le béton frais est coulé de manière que ledit béton durci et fritté constitue une sole d'un four de verrerie.

## Claims

1. Powder comprising, in percentages by weight;
(a) 94% to 99% of particles of at least one refractory material, the main constituent or constituents of which are alumina and/or zirconia and/or silica;
(b) 1% to 6% of a hydraulic cement;
(c) 0 to 0.03% of organic fibres;
(d) optionally, 0.075% to 1%, preferably 0.1% to 1%, of a surfactant; and
(e) optionally, a setting accelerator,
the fraction of particles having a size below 40 µm being distributed, in percentages by weight relative to the weight of the powder, in the following manner:
- friction < 0.5 µm: ≥ 4%
- friction < 2 µm : ≥ 5%,
- fraction. < 10 µm: ≥ 16%
- fraction < 40 µm: 29-45%,
and the proportion of zirconia in the fraction of particles having a size smaller than 10 µm called "fines", being between 35% and 75% by weight relative to the total weight of said fraction.

2. Powder according to the preceding claim, comprising 0.075% to 1% of a surfactant and/or comprising a setting accelerator.

3. Powder according to either of the preceding claims, in which the proportion of zirconia in the fines fraction is greater than 40% but less than 60%.

4. Powder according to any one of the preceding claims, in which the particles of the powder are distributed in the following manner, in percentages by weight:
- fraction < 0.5 µm: ≥ 5%
- friction< 2 µm: ≥ 8% and/or
- fraction < 10 µm: ≥ 22% and/or
- fraction < 40 µm: ≥ 30%.

5. Powder according to any one of the preceding claims, in which the particles of the powder are distributed in the following manner, in percentages by weight:
- fraction < 0.5 µm: ≤ 6.5%
- fraction < 2 µm: ≥ 10% and/or
- fraction < 10 µm: ≤ 35% and/or
- fraction < 40 µm : ≤ 40%.

6. Powder according to any one of the preceding claims, in which the particles of the powder are distributed in the following manner, in percentages by weight:
- fraction < 2 µm: ≤ 18%,

7. Powder according to any one of the preceding claims, which has the following composition by weight, for a total of more than 95%:
- Al₂O₃: Al₂O₃: 40%-65%
- ZrO₂: 20%-45%
- SiO₂: 8%-20%,

8. Powder according to any one of the preceding claims, which has a composition by weight such that:
- Al₂O₃: ≥ 45% and/or
- ZrO₂: ≥ 25% and/or
- SiO₂: ≤15%.

9. Powder according to any one of the preceding claims, which has a composition by weight such that:
- Al₂O₃: ≤60% and/or
- ZrO₂; ≤40% and/or
- SiO₂: ≥12%.

10. Powder according to any one of claims 7 to 9, in which Al₂O₃ + ZrO₂ + SiO₂ ≥ 97%.

11. Powder according to any one of the preceding claims, comprising between 3% and 5% of silica fume.

12. Powder according to any one of the preceding claims, in which the proportion of silica in the fraction of particles having a size of less than 500 µm is less than or equal to 16% by weight relative to the weight of said fraction, and/or, in which the proportion of silica in the fraction of particles having a size of less than 40 µm is less than or equal to 14.5% by weight relative to the weight of said fraction.

13. Powder according to any one of the preceding claims, in which the surfactant is a modified polycarboxylate ether.

14. Powder according to any one of the preceding claims, in which the fraction of particles having a size of less that 500 µm represents more than 50% by weight of said powder, and/or, in which the fraction of particles having a size of between 40 µm and 500 µm is between 15 and 30% relative to the weight of said powder.

15. Process for manufacturing a cured and sintered concrete, comprising the following successive steps:
1) preparation of a powder;
2) activation of said powder so as to obtain a fresh concrete;
3) laying of said fresh concrete;
4) curing of said fresh concrete so as to obtain a cured concrete; and
5) sintering of said cured concrete,
in which process, in step 1), the powder is in accordance with any one of the preceding claims and in which, in step 3), the fresh concrete is poured and undergoes no vibration operation before it is cured.

16. Process according to the preceding claim, in which, in step 1), raw materials containing more than 90% zirconia by weight and having a median size D₅₀ of less 10 µm are used as a zirconia source in the fines.

17. Process according to either of the two immediately preceding claims, in which, in step 2), said powder is activated by adding thereto an amount of water of between 5.1 and 8.2% by weight relative to the weight of said powder.

18. Process according to any one of the three immediately preceding claims, in which, in step 3), the fresh concrete is pumped by means of a pump producing a suction pressure of 180 bar or less and/or conveyed to the pouring site by flowing under gravity in a chute.

19. Process according to any one of the four immediately preceding claims, in which, in step 3), the fresh concrete is poured so that said cured and sintered concrete constitutes a floor of a glass furnace

## Patentansprüche

1. Pulver in Massenprozent enthaltend,
a) 94% bis 99% an Partikeln aus mindestens einem feuerfesten Material, dessen hauptsächlichster Bestandteil oder dessen hauptsächliche Bestandteile Aluminiumoxid und/oder Zirkon und/oder Siliciumdioxid sind,
b) 1% bis 6% eines hydraulischen Zements,
c) 0 bis 0,03% organischer Fasern,
d) optional 0,075% bis 1%, vorzugsweise 0,1% bis 1% eines oberflächenaktiven Stoffes,
e) optional einen Verfestigungsbeschleuniger,
wobei die Fraktion der Partikel mit einer Größe kleiner als 40µm in Massenprozent im Verhältnis zur Masse des Pulvers folgendermaßen verteilt sind:
- Fraktion <0,5µm: ≥4%
- Fraktion <2µm: ≥5%
- Fraktion <10µm: ≥16%
- Fraktion <40µm: 29-45%,
wobei der Prozentsatz an Zirkon in der Fraktion der Teilchen mit einer Größe kleiner als 10µm (genannt "fines"), zwischen 35% und 75% in der Masse im Verhältnis zur totalen Masse der genannten Fraktion ist.

2. Pulver nach dem vorhergehenden Anspruch, enthaltend 0,075% bis 1% eines oberflächenaktiven Stoffes und/oder enthaltend einen Verfestigungsbeschleuniger.

3. Pulver nach einem der vorhergehenden Ansprüche, in welchem der Prozentsatz an Zirkon in der Fraktion der "fines" größer als 40% und kleiner als 60% ist.

4. Pulver nach einem der vorhergehenden Ansprüche, in welchem die Pulverteilchen in Massenprozent folgendemaßen verteilt sind:
- Fraktion <0,5µm: ≥5%
- Fraktion <2µm: ≥8% und/oder
- Fraktion <10µm: ≥22% und/oder
- Fraktion <40µm: ≥30%.

5. Pulver nach einem der vorhergehenden Ansprüche, in welchem die Pulverpartikel in Massenprozent folgendemaßen verteilt sind:
- Fraktion <0,5µm: ≤6,5%
- Fraktion <2µm: ≥10% und/oder
- Fraktion <10µm: ≤35% und/oder
- Fraktion <40µm: ≤40%.

6. Pulver nach einem der vorhergehenden Ansprüche, in welchem die Pulverpartikel in Massenprozent folgendermaßen verteilt sind:
- Fraktion <2µm: ≤18%.

7. Pulver nach einem der vorhergehenden Ansprüche, die folgende Massenzusammensetzung für eine Gesamtheit von mehr als 95% darstellt:
Al₂O₃: 40%-65%
ZrO₂: 20%-45%
SiO₂: 8%-20%

8. Pulver nach einem der vorhergehenden Ansprüche, welches eine Massenzusammensetzung darstellt, derart dass
Al₂O₃: ≥45% und/oder
ZrO₂: ≥25% und/oder
SiO₂: ≤15%

9. Pulver nach einem der vorhergehenden Ansprüche, welches eine Massenzusammensetzung darstellt, derart dass
Al₂O₃ : ≤60% und/oder
ZrO₂: ≤40% und/oder
SiO₂: ≥12%

10. Pulver nach einem der Ansprüche 7 bis 9, in welchem Al₂O₃ + ZrO₂ + SiO₂>97% ist.

11. Pulver nach einem der vorhergehenden Ansprüche, welches zwischen 3% und 5% Siliciumdioxidrauch enthält.

12. Pulver nach einem der vorhergehenden Ansprüche, in welchem der Prozentsatz an Siliciumdioxid in der Fraktion der Partikel mit einer Größe die kleiner ist als 500µm, kleiner oder gleich 16% ist und zwar in Massenprozenten im Verhältnis zur Masse der besagten Fraktion und/oder in welchem der Prozentsatz an Siliciumdioxid in der Fraktion der Partikel mit einer Größe die kleiner ist als 40µm, kleiner oder gleich 14,5% ist und zwar in Massenprozenten im Verhältnis zur Masse besagter Fraktion.

13. Pulver nach einem der vorhergehenden Ansprüche, in welchem der oberflächenaktive Stoff ein modifizierter Polycarboxylatäther ist.

14. Pulver nach einem der vorhergehenden Ansprüche, in welchem die Fraktion der Partikel mit einer Größe kleiner als 500µm mehr als 50% der Masse des Pulvers darstellt, und/oder in welchem die Fraktion der Partikel mit einer Größe zwischen 40µm und 500µm zwischen 15 und 30% liegt im Verhältnis zur Masse des Pulvers.

15. Verfahren zur Herstellung eines gehärteten und gesinterten .Betons mit den folgenden aufeinanderfolgenden Verfahrensschritten:
1) Zubereitung eines Pulvers
2) Aktivierung des Pulvers, um einen frischen Beton zu erhalten;
3) in Position bringen des frischen Betons;
4) Aushärtung des frischen Betons, um einen ausgehärteten Beton zu erhalten;
5) Sinterung des ausgehärteten Betons;
ein Verfahren, nach welchem im Schritt 1 das Pulver konform ist mit einem nach den vorhergehenden Ansprüchen und nach welchem im Schritt 3 der frische Beton gegossen und vor seiner Aushärtung keinerlei Vibration unterworfen wird.

16. Verfahren nach dem vorhergehenden Anspruch, bei welchem im Schritt 1 als Zirkonquelle in den "fines" erste Materialien verwendet werden, welche in der Masse mehr als 90% Zirkon enthält und eine mittlere Größe D50 darstellt, welche kleiner als 10µm ist.

17. Verfahren nach einem der vorhergehenden beiden Ansprüche, bei welchem im Schritt 2 das Pulver derart aktiviert wird, indem eine Menge Wasser zwischen 5,1 und 8,2% in Massenprozent im Verhältnis zur Masse des Pulvers zugegeben wird.

18. Verfahren nach einem der drei vorhergehenden Ansprüche, bei welchem im Schritt 3 der frische Beton mittels einer Pumpe gepumpt wird, die einen Saugdruck von kleiner oder gleich 180 bar aufbringt und/oder auf den Gießort durch Ausgießen unter Schwerkrafteinfluss in einer Förderrutsche befördert wird.

19. Verfahren nach einem der vier vorhergehenden Ansprüche, bei welchem im Schritt 3 der frische Beton derart gegossen wird, dass der ausgehärtete und gesinterte Beton eine Sohle eines Glasofens bildet.
